(19) Europäisches Patentamt / European Patent Office / Office européen des brevets

(11) **EP 4 711 997 A1**

(12) **EUROPEAN PATENT APPLICATION**

(43) Date of publication:
18.03.2026 Bulletin 2026/12

(21) Application number: 25200424.7

(22) Date of filing: 05.09.2025

(51) International Patent Classification (IPC):
**G06Q 10/20** (2023.01)  **F02D 19/02** (2006.01)
**G05B 23/02** (2006.01)

(52) Cooperative Patent Classification (CPC):
**G06Q 10/20; F02D 41/22; G05B 23/0283;**
F02D 2200/101; F02D 2200/602; F02D 2200/701

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.09.2024 JP 2024159393**

(71) Applicant: **TOYOTA JIDOSHA KABUSHIKI KAISHA**
**Toyota-shi, Aichi-ken 471-8571 (JP)**

(72) Inventor: **HAYASAKA, Masato**
**Aichi-ken, 471-8571 (JP)**

(74) Representative: **D Young & Co LLP**
**3 Noble Street**
**London EC2V 7BQ (GB)**

(54) **VEHICLE MANAGEMENT SYSTEM, METHOD OF CONTROLLING VEHICLE, AND BATTERY ELECTRIC VEHICLE**

(57) A vehicle management system that is applied to a vehicle (10) includes one or more processors (101) and virtual maintenance. The one or more processors (101) generate a simulated driving environment that simulates a driving environment of virtual mobility. The virtual maintenance is maintenance to be virtually performed on the virtual mobility. The one or more processors (101) execute first environment change processing of changing the simulated driving environment, based on a maintenance indicator indicating a degree of need for the virtual maintenance, and execute second environment change processing of changing the simulated driving environment, according to at least the virtual maintenance.

FIG. 1

EP 4 711 997 A1

**Description**

BACKGROUND OF THE INVENTION

1. Field of the Invention

The present disclosure relates to a technology of reproducing an environment of virtual mobility in or on a vehicle.

2. Description of Related Art

Japanese Unexamined Patent Application Publication No. 2022-036005 (JP 2022-036005 A) discloses a vehicle control device that controls audio equipment in such a manner that a virtual sound of a virtual vehicle including a virtual engine occurs in the vehicle cabin of a real vehicle.

SUMMARY OF THE INVENTION

In a real vehicle, a driving environment (driving characteristics, sounds, vibrations, and the like) changes with traveling. Among factors that cause a change in the driving environment are deterioration or consumption of a consumable, accumulation of a substance adhering to each part, and the like. The driving environment that has changed is apt to return to the original state as a result of the consumable being replaced or the adhering substance being removed by maintenance. In the related art, a simulation of a driving environment that factors in such a point of view is not performed.

The present disclosure provides a vehicle management system, a method of controlling a vehicle, and a battery electric vehicle that enable a vehicle user to feel a realer driving environment by factoring the point of view of maintenance into a technology of simulating a driving environment.

A first aspect of the present disclosure relates to a vehicle management system that is applied to a vehicle. The vehicle management system includes one or more processors and virtual maintenance. The one or more processors are configured to generate a simulated driving environment that simulates a driving environment of virtual mobility. The virtual maintenance is maintenance that is virtually performed on the virtual mobility. The one or more processors are configured to execute first environment change processing of changing the simulated driving environment, based on a maintenance indicator indicating a degree of need for the virtual maintenance. The one or more processors are configured to execute second environment change processing of changing the simulated driving environment, according to at least the virtual maintenance.

A second aspect of the present disclosure relates to a method of controlling a vehicle. The method includes: (i) generating a simulated driving environment that simulates a driving environment of virtual mobility; (ii) virtually performing maintenance of the virtual mobility; (iii) executing first environment change processing of changing the simulated driving environment, based on a maintenance indicator indicating a degree of need for virtual maintenance that is the virtually performed maintenance; and (iv) executing second environment change processing of changing the simulated driving environment, according to at least the virtual maintenance.

A third aspect of the present disclosure relates to a battery electric vehicle that uses an electric motor for a traveling power plant. The battery electric vehicle includes one or more processors that are configured to generate a simulated driving environment that simulates a driving environment of virtual mobility. Virtual maintenance is maintenance that is virtually performed on the virtual mobility. The one or more processors are configured to execute first environment change processing of changing the simulated driving environment, based on a maintenance indicator indicating a degree of need for the virtual maintenance. The one or more processors are configured to execute second environment change processing of changing the simulated driving environment, according to at least the virtual maintenance.

With the vehicle management system, the method of controlling a vehicle, and the battery electric vehicle, the first environment change processing generates changes in a driving environment of virtual mobility, as a simulated driving environment, in or on a vehicle 10, based on a maintenance indicator. The second environment change processing further changes the simulated driving environment changed through the first environment change processing, in response to virtual maintenance. By the first environment change processing and the second environment change processing being combined, a progress is reproduced in which the driving environment changes with traveling of a real vehicle, and the driving environment that has changed recovers by maintenance. Thus, a user of the vehicle 10 can more realistically feel a sensation as if riding in the virtual mobility.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram showing a vehicle and a vehicle management system according to an embodiment of the present disclosure;
FIG. 2 is a conceptual diagram for describing a simulation mode included in the vehicle management system;
FIG. 3 is a block diagram showing an example of a functional configuration, related to generation and output of a simulated sound of virtual mobility, of the vehicle and the vehicle management system in the embodiment;

FIG. 4 is a block diagram showing another example of the functional configuration related to generation and output of a simulated sound of virtual mobility;

FIG. 5 is a graph showing an outline of environment change processing in the vehicle and the vehicle management system in the embodiment;

FIG. 6A is a flowchart showing a series of processes related to second environment change processing in the vehicle and the vehicle management system in the embodiment;

FIG. 6B is a flowchart showing a series of processes related to the second environment change processing in the vehicle and the vehicle management system in the embodiment;

FIG. 7A is a schematic diagram showing an example of a maintenance notice presentation screen in the vehicle and the vehicle management system in the embodiment;

FIG. 7B is a schematic diagram showing another example of the maintenance notice presentation screen in the vehicle and the vehicle management system in the embodiment;

FIG. 8A is a graph showing a modification example of the second environment change processing;

FIG. 8B is a graph showing a modification example of the second environment change processing;

FIG. 9 is a block diagram for describing an in-vehicle device and a management server included in the vehicle management system;

FIG. 10 is a block diagram showing a first configuration example related to a power control system when the vehicle is a battery electric vehicle;

FIG. 11 shows various examples of an engine model, a clutch model and a transmission model included in a model when the vehicle is an MT vehicle;

FIG. 12 shows torque characteristics of an electric motor realized through motor control using the MT vehicle model; and

FIG. 13 is a block diagram showing a second configuration example related to the power control system when the vehicle is a battery electric vehicle.

## DETAILED DESCRIPTION OF EMBODIMENTS

An embodiment of the present disclosure is described with reference to the accompanying drawings.

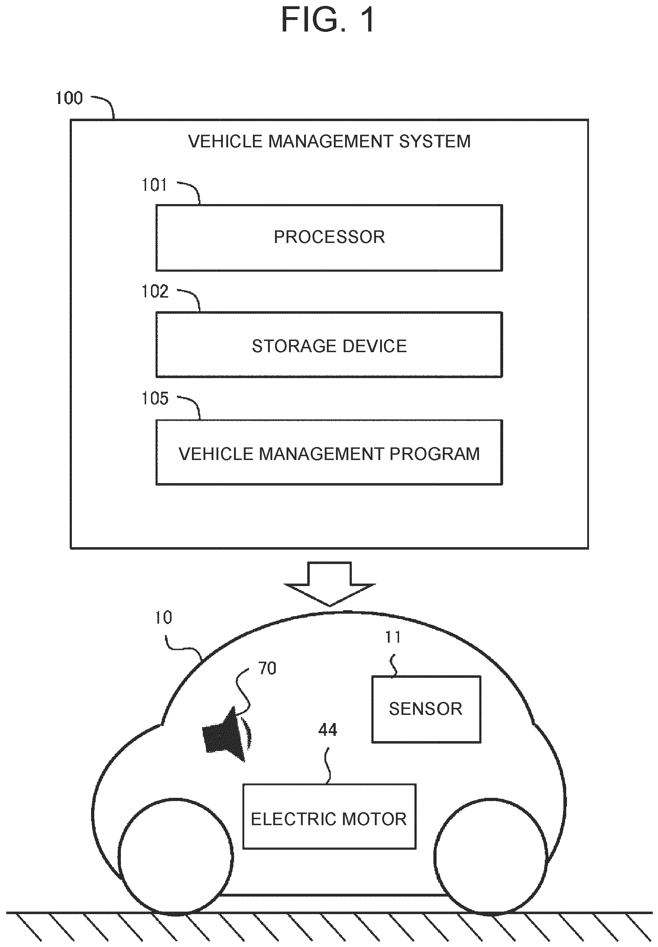

A vehicle and a vehicle management system are described below. FIG. 1 is a conceptual diagram showing a vehicle 10 and a vehicle management system 100 according to the present embodiment. For example, the vehicle 10 is a battery electric vehicle that uses an electric motor 44 for a traveling power plant. Examples of the electric motor 44 include a brushless DC motor and a three-phase synchronous motor. As another example, the vehicle 10 may be an engine vehicle that uses an internal combustion engine for a traveling power plant.

The vehicle 10 includes various sensors 11. The various sensors 11 detect a driving state of the vehicle 10. Examples of the various sensors 11 include an accelerator position sensor, a brake position sensor, a steering angle sensor, a steering torque sensor, a wheel speed sensor, an acceleration sensor, a rotation speed sensor, a position sensor, a recognition sensor, and the like. The accelerator position sensor detects the amount of operation of an accelerator pedal. The brake position sensor detects the amount of operation of a brake pedal. The steering angle sensor detects the steering angle of a steering wheel. The steering torque sensor detects the steering torque of the steering wheel. The wheel speed sensor detects the rotation speed of a tire-wheel assembly of the vehicle 10. The acceleration sensor detects the lateral acceleration rate and the front-rear acceleration rate of the vehicle 10. The rotation speed sensor detects the rotation speed of the electric motor 44. The position sensor detects the position of the vehicle 10. An example of the position sensor is a global navigation satellite system (GNSS) sensor. The recognition sensor is a sensor for recognizing (detecting) a situation around the vehicle 10. Examples of the recognition sensor include a camera, light detection and ranging (LIDAR), a radar, and the like.

Further, the vehicle 10 is equipped with one or more speakers 70. For example, the speaker 70 is an inside speaker that outputs sound in the vehicle cabin of the vehicle 10. As another example, the speaker 70 may be an outside speaker that outputs sound to the outside of the vehicle 10. The vehicle 10 may include both an inside speaker and an outside speaker. The speaker 70 may be a vibration speaker. The vibration speaker is attached under a seat, to a body, or the like and directly vibrates the object to which the vibration speaker is attached.

The vehicle management system 100 is applied to such a vehicle 10 and manages the vehicle 10. The entire vehicle management system 100 may be mounted in the vehicle 10. As another example, at least part of the vehicle management system 100 may be included in an external management server outside of the vehicle 10. In such a case, the vehicle management system 100 may remotely manage the vehicle 10. As further another example, the vehicle management system 100 may be distributed between the vehicle 10 and the management server.

As a generalization, the vehicle management system 100 includes one or more processors 101 (hereinafter, simply referred to as the processor 101) and one or more storage devices 102 (hereinafter, simply referred to as the storage device 102). The processor 101 executes various processes. Examples of the processor 101 include a general-purpose processor, an application-specific processor, a central processing unit (CPU), a graphics processing unit (GPU), an application-specific integrated circuit (ASIC), a field-programmable gate array (FPGA), an integrated circuit, conventional circuits, and/or a combination of any thereof. The processor 101 can also be referred to as circuitry or processing circuitry. The circuitry is hardware programmed to implement described functions, or hardware that performs functions. The storage device 102 stores various kinds of information. Examples of the storage device 102 include a volatile memory, a non-volatile memory, a hard disk drive (HDD), a solid-state drive (SSD), and the like. The functionality of the vehicle management system 100 is implemented through cooperation between the processor 101 and the storage device 102.

One or more vehicle management programs 105 (hereinafter, simply referred to as the vehicle management program 105) are one or more computer programs that are executed by the processor 101. The functionality of the vehicle management system 100 may be implemented through cooperation between the processor 101 executing the vehicle management program 105 and the storage device 102. The vehicle management program 105 is stored in the storage device 102. Alternatively, the vehicle management program 105 may be recorded on a computer-readable recording medium.

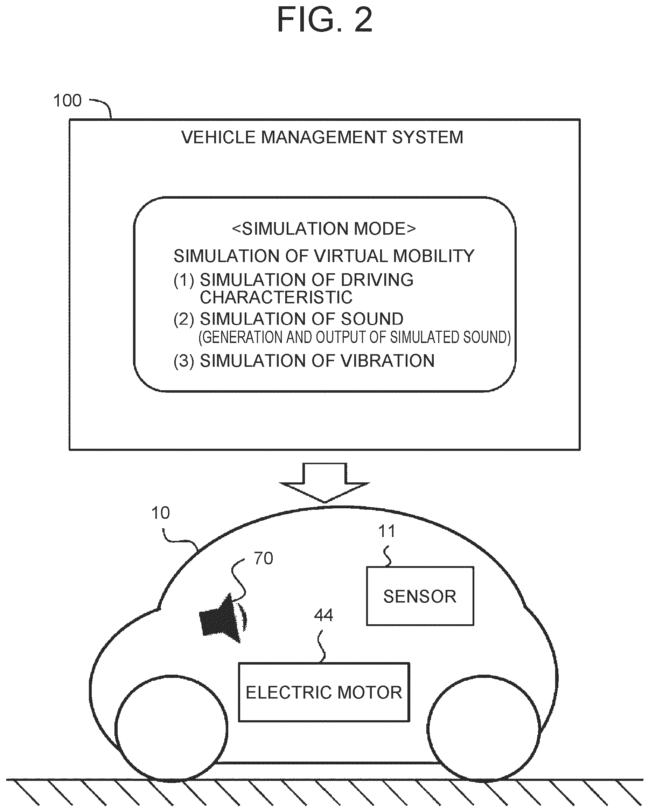

Next, a simulation mode is described in which virtual mobility is simulated. FIG. 2 is a conceptual diagram for describing the "simulation mode" included in the vehicle management system 100 according to the present embodiment. The simulation mode is a mode in which "virtual mobility" is simulated (reproduced) on the vehicle 10. For example, the virtual mobility to be simulated is a different type of vehicle from the vehicle 10. As another example, the virtual mobility to be simulated may be a train, a plane, or the like.

For example, when the vehicle 10 is a battery electric vehicle, the vehicle management system 100 may simulate (reproduce) a "driving characteristic" of another vehicle on the battery electric vehicle. Another vehicle (virtual mobility) to be simulated may be another battery electric vehicle, or a manual transmission vehicle (MT vehicle). For example, the vehicle management system 100 may simulate (reproduce) a driving characteristic of an MT vehicle on the battery electric vehicle. Details of an "MT mode (manual mode)" in which a driving characteristic of an MT vehicle is simulated on the battery electric vehicle will be described later. In any case, the vehicle management system 100 manages virtual mobility model data indicating a model of the virtual mobility, and reproduces a driving characteristic of the virtual mobility, based on the virtual mobility model data. Thus, the driver of the vehicle 10 can experience a sensation as if driving the virtual mobility.

It is also possible to change the virtual mobility to be simulated. Specifically, a plurality of types of virtual mobility model data related to a plurality of types of virtual mobility is prepared. A user of the vehicle 10 designates a preferred type of virtual mobility, and the vehicle management system 100 reproduces a driving characteristic by using virtual mobility data related to the type of virtual mobility designated by the user. Thus, the driver of the vehicle 10 can experience a sensation as if driving the preferred virtual mobility. The virtual mobility to be simulated may be selected by a user of the vehicle 10. In such a case, the user can select a type of virtual mobility to be simulated from among a plurality of types of virtual mobility, according to the own preference. As described above, when a user selects a target to be simulated, the "simulation mode" can also be referred to as "on-demand mode". When the on-demand mode is applied to the vehicle 10, the vehicle 10 can also be referred to as "on-demand car". The on-demand mode is particularly effective when a user desires to experience a sensation of driving a preferred virtual vehicle.

As another example, the vehicle management system 100 may simulate (reproduce) a "sound" of the virtual mobility in the vehicle 10. In other words, the vehicle management system 100 may generate a simulated sound that simulates a sound of the virtual mobility and output the simulated sound via the speaker 70 of the vehicle 10. Typically, a sound to be simulated (reproduced) is a drive sound or a travel sound of the virtual mobility. The virtual mobility to be simulated is, for example, a vehicle. A vehicle to be simulated may be an engine vehicle, or a battery electric vehicle. For example, when the vehicle 10 is a battery electric vehicle and the virtual mobility is an engine vehicle, the vehicle management system 100 simulates (reproduces) an engine sound of the engine vehicle in the battery electric vehicle. Note that the virtual mobility to be simulated is not limited to a vehicle, and other types thereof may include a train, a plane, and the like.

As further another example, the vehicle management system 100 may simulate (reproduce) "vibrations" of the virtual mobility in the vehicle 10. In other words, the vehicle management system 100 may generate simulated vibrations that simulate vibrations of the virtual mobility and output the simulated vibrations via the speaker 70 (vibration speaker) of the vehicle 10. Typically, vibrations to be simulated (reproduced) are vibrations occurring in connection with traveling of the virtual mobility. Examples of the virtual mobility to be simulated include an engine vehicle, a battery electric vehicle, a train, a plane, and the like, as in the case where a sound is simulated.

As a generalization, it can be said that simulating a driving characteristic, a sound, vibrations, or the like of the virtual mobility is included in generating a "simulated driving environment". A simulated driving environment can be defined as an environment in which a sensation felt when a person rides in or on the virtual mobility is reproduced.

Hereinafter, a further detailed description is given of generation and output of a simulated sound that simulates a sound of the virtual mobility. Note that in the description below, a simulated engine sound that simulates an engine sound of an engine vehicle is considered as an example. However, the present disclosure is also similarly applicable to other sounds. When a generalization is made, "simulated engine sound" in the description below will be read for "simulated sound".

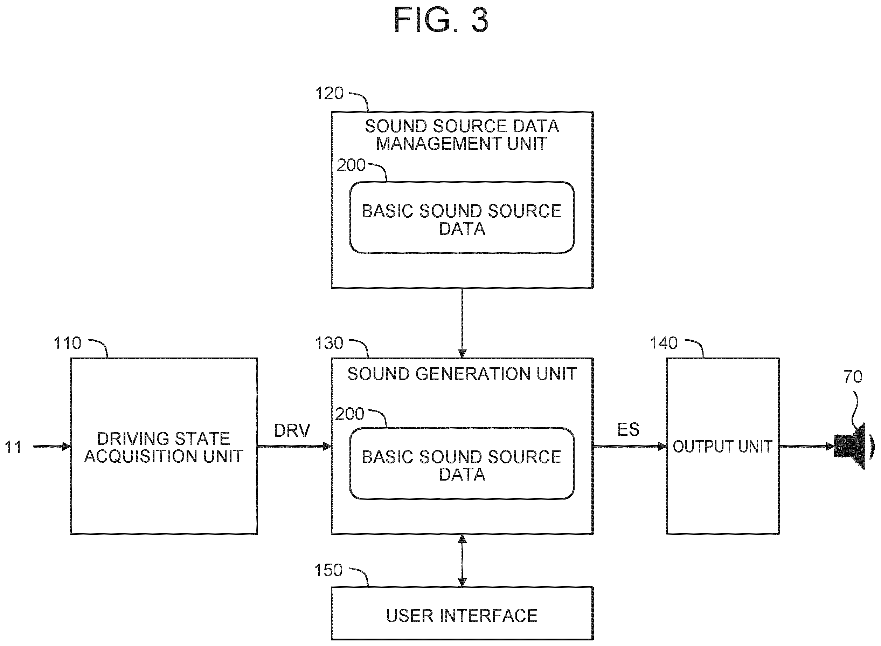

FIG. 3 is a block diagram showing an example of a functional configuration related to generation and output of a simulated sound of the virtual mobility. The vehicle management system 100 includes, as functional blocks, a driving state acquisition unit 110, a sound source data management unit 120, a sound generation unit 130, and an output unit 140. For example, the functional blocks may be implemented through cooperation between the processor 101 executing the vehicle management program 105 and the storage device 102.

The driving state acquisition unit 110 acquires driving state information DRV indicating the driving state of the vehicle 10. The driving state information DRV includes information related to a driving operation performed by the driver, information related to the traveling state of the vehicle 10, information related to a situation around the vehicle 10, and the like. Typically, the driving state information DRV includes information detected by the sensors 11 mounted on the vehicle 10. For example, the driving state information DRV includes the amount of operation of the accelerator pedal (accelerator operation amount), the amount of operation of the brake pedal (brake operation amount), a steering angle, a steering speed, a steering torque, a wheel speed, a vehicle speed, a front-rear acceleration rate, a lateral acceleration rate, the rotation speed of the electric motor 44, and the like. The driving state information DRV may include the position of the vehicle 10. The driving state information DRV may include a situation around the vehicle 10 recognized (detected) by the recognition sensor.

The driving state information DRV includes a virtual engine speed Ne. Here, it is assumed that the vehicle 10 uses a virtual engine for a traveling power plant. The virtual engine speed Ne is a virtual engine speed when it is assumed that the vehicle 10 is driven by the virtual engine. For example, the driving state acquisition unit 110 may calculate the virtual engine speed Ne in such a manner that the virtual engine speed Ne increases as the wheel speed increases. When the vehicle 10 includes a manual mode (MT mode), which will be described later, the driving state acquisition unit 110 may calculate the virtual engine speed Ne in the manual mode, based on the wheel speed, a total reduction gear ratio, and a virtual clutch slip ratio. Details of a method for calculating the virtual engine speed Ne in the manual mode will be described later.

The sound source data management unit 120 stores and manages basic sound source data 200 that is used to generate a simulated engine sound. The sound source data management unit 120 is implemented mainly by the one or more storage devices 102. Typically, the basic sound source data 200 includes a plurality of types of sound source data. The types of sound source data include, for example, sound source data (for low rpm, for medium rpm, for high rpm) on sounds caused by engine combustion, sound source data (for low rpm, for medium rpm, for high rpm) on sounds caused by a drive train such as gears, sound source data on noise sounds, sound source data on event sounds (examples: a rasping sound, an engine stall sound), and the like. Each type of sound source data is generated beforehand through simulation or the like based on an engine model and a vehicle model of an engine vehicle. Each type of sound source data can be flexibly adjusted. In other words, at least one of the sound pressure and the frequency of a sound represented by sound source data can be flexibly adjusted.

The sound generation unit 130 (sound simulator) is a simulator that generates a simulated engine sound. The sound generation unit 130 acquires at least part of the driving state information DRV from the driving state acquisition unit 110. The sound generation unit 130 acquires, in particular, information on the virtual engine speed Ne or the vehicle speed from the driving state acquisition unit 110. The sound generation unit 130 reads the basic sound source data 200 from the sound source data management unit 120. Then, the sound generation unit 130 generates a simulated engine sound corresponding to the driving state (virtual engine speed Ne or vehicle speed) of the vehicle 10 by combining one or more types of sound source data included in the basic sound source data 200. Engine sound data ES is data representing the generated simulated engine sound.

Note that simulated engine sound generation is a commonly known technology and is not limited in the present embodiment. For example, a simulated engine sound may be generated by a commonly known engine sound simulator that is adopted in games or the like. A scheme may be used in which a virtual engine speed Ne-frequency map and a virtual engine torque-sound pressure map are kept beforehand, and the frequency of a simulated engine sound is increased or decreased in direct proportion to the virtual engine speed Ne, and the sound pressure is increased or decreased in direct proportion to the virtual engine torque.

The output unit 140 receives the engine sound data ES generated by the sound generation unit 130. Then, the output unit 140 outputs the simulated engine sound via the speaker 70, based on the engine sound data ES. Thus, the driver of the vehicle 10 can experience a sensation as if driving the virtual mobility.

The vehicle management system 100 may further include a user interface 150. The user interface 150 includes an input device and a display device. Examples of the input device include a touch panel, a switch, a button, and the like. Examples of the display device include a display, a touch panel, and the like. A user (examples: the driver, a passenger) of the vehicle 10 can turn on and off generation and output of a simulated engine sound by using the user interface 150.

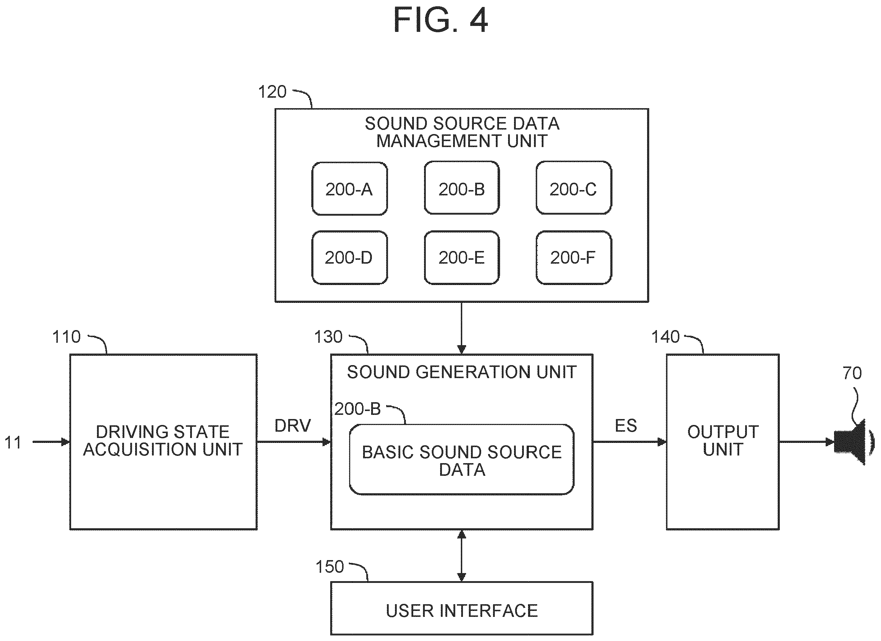

FIG. 4 is a block diagram showing another example of the functional configuration related to generation and output of a simulated sound of the virtual mobility. In the example shown in FIG. 4, the sound source data management unit 120 stores and manages a plurality of types of basic sound source data 200 (200-A, 200-B, 200-C, ...) corresponding to a plurality of types of virtual mobility (A, B, C, ...), respectively. In other words, the sound source data management unit 120 stores and manages the basic sound source data 200 for each type of virtual mobility. Each type of basic sound source data 200 is generated beforehand based on an engine model and a vehicle model of corresponding virtual mobility.

A user of the vehicle 10 can designate a simulation target from among the types of virtual mobility. Specifically, the sound source data management unit 120 or the sound generation unit 130 presents the types of virtual mobility to the user via the user interface 150 (display device). The user designates one among the types of virtual mobility via the user interface 150 (input device). The sound generation unit 130 acquires one, among the types of basic sound source data 200, that corresponds to the virtual mobility designated by the user from the sound source data management unit 120. The sound generation unit 130 generates a simulated engine sound by using the acquired basic sound source data 200 (example: the basic sound source data 200-B corresponding to the virtual mobility B). Thus, the driver of the vehicle 10 can experience a sensation as if driving the preferred virtual mobility. A user of the vehicle 10 can also switch simulated engine sounds to be output from the speaker 70, by using the user interface 150.

Next, environment change processing is described. In a real vehicle, the driving environment (driving characteristics, sounds, vibrations, and the like) thereof changes with traveling. Factors that cause a change in the driving environment include deterioration or consumption of a consumable, such as engine oil or transmission oil, and remaining of an adhering substance, such as a deposit (combustion residue) inside the engine. Accordingly, the driving environment that has changed is apt to return to the original state as a result of the consumable being replaced or replenished or the adhering substance being removed by maintenance. The vehicle management system 100 according to the present embodiment reproduces a maintenance-related change in the driving environment. In other words, the vehicle management system 100 changes a simulated driving environment with traveling of the vehicle 10, and changes the simulated driving environment in response to maintenance virtually performed on the virtual mobility. Thus, a user of the vehicle 10 can more realistically feel a sensation of riding in or on the virtual mobility. The maintenance virtually performed on the virtual mobility is referred to as "virtual maintenance" hereinafter.

The vehicle management system 100 executes processing of changing the simulated driving environment, in association with the virtual maintenance. Such processing is referred to as "environment change processing" hereinafter. Through the environment change processing, a sound, a driving characteristic, vibrations, or the like generated in or on the vehicle 10 is changed.

Next, the virtual maintenance is described. The virtual maintenance includes replenishment or replacement of a virtual consumable of the virtual mobility. A virtual consumable refers to a consumable that deteriorates or is consumed as the virtual mobility virtually travels. Examples of the virtual consumable include engine oil, transmission oil, brake oil, gasoline, engine air cleaner, and the like. In other words, the virtual maintenance includes replenishment or replacement of various oils, replenishment of gasoline, replacement of air cleaner, and the like.

The virtual maintenance includes removal of a virtual adhering substance to the virtual mobility. A virtual adhering substance refers to a substance that adheres as the virtual mobility virtually travels. An example of the virtual adhering substance is a deposit (combustion residue) inside the engine. In other words, the virtual maintenance includes removal of a deposit.

The virtual maintenance includes virtual replacement of a part included in the virtual vehicle. Parts here include a tire, a wheel, a muffler, and the like.

The virtual maintenance is performed by the vehicle management system 100. On the other hand, determination of whether to perform the virtual maintenance may be made by the vehicle management system 100 or a user of the vehicle 10. The user can instruct the vehicle management system 100, at any timing, to perform a type of virtual maintenance designated by the user. Alternatively, the vehicle management system 100 may present a notice related to the virtual maintenance to a user of the vehicle 10 at an appropriate timing (details of which will be described later). In such a case, the user can communicate an instruction on the virtual maintenance to the vehicle management system 100 by responding to the notice.

Next, details of the environment change processing are described. A change in a simulated driving environment caused through the environment change processing varies with the content of the virtual maintenance supporting the simulated driving environment. For example, when the virtual maintenance is replenishment or replacement of engine oil, the magnitude of an explosion primary component of an engine sound to be simulated is changed as a result of the virtual maintenance. In a real engine vehicle, engine friction changes as a result of replenishment or replacement of engine oil. The change in engine friction causes a change in a driving characteristic (driving force). To reproduce such events, the vehicle management system 100 changes the driving characteristic (driving force) of the vehicle 10 through the environment change processing. When the virtual maintenance is replenishment or replacement of transmission oil, the vehicle management system 100 changes the driving force of the vehicle 10 through the environment change processing. The processing reproduces a change in transmission friction and a following change in driving force that occur on a real vehicle. When the target of the virtual maintenance is air cleaner, the vehicle management system 100 also changes the driving force of the vehicle 10 through the environment change processing. The processing reproduces a change in the degree of engine pumping loss and a following change in driving force that occur on a real vehicle.

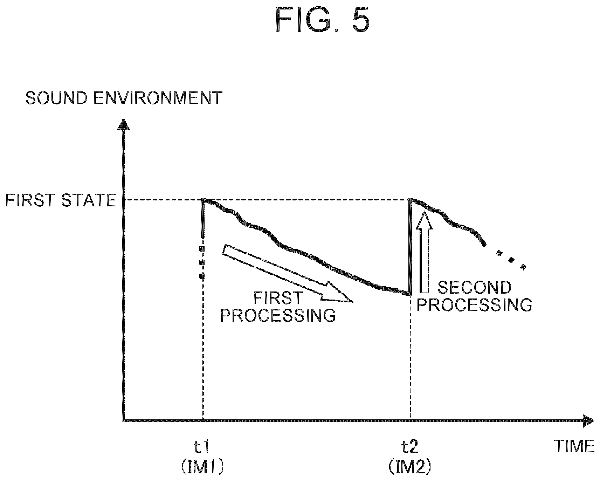

FIG. 5 is a graph showing an outline of the environment change processing. The horizontal axis of the graph represents passage of time. The vertical axis of the graph represents a simulated driving environment generated in the vehicle 10. Note that in the present embodiment, a description is given by taking sound as an example of the simulated driving environment. In other words, the vertical axis of the graph indicates states of sound determined by sound pressure and frequency. As shown in FIG. 5, the environment change processing includes "first environment change processing" and "second environment change processing". For convenience of description, in the present embodiment and the drawings, the "first environment change processing" and the "second environment change processing" are presented as "first processing" and "second processing", respectively. The first processing is processing of changing the simulated driving environment during the interval between the virtual maintenance. The second processing is processing of changing the simulated driving environment in response to the virtual maintenance. Hereinafter, the first processing and the second processing are described in detail.

Next, the first environment change processing is described. The first environment change processing (first processing) is processing of changing the simulated driving environment during the interval between the virtual maintenance. In the first processing, the vehicle management system 100 changes the simulated driving environment, based on a "maintenance indicator" indicating a degree of need for the virtual maintenance. Simple examples of the maintenance indicator include a traveled distance and a travel time based on the time of the previous virtual maintenance. Typically, the first processing gradually changes the simulated driving environment during the interval between the virtual maintenance.

Aa a more complex example, the amount of consumption of a virtual consumable or the amount of adherence of a virtual adhering substance in the virtual mobility may be used for the maintenance indicator. In such a case, the vehicle management system 100 calculates the amount of consumption of the virtual consumable or the amount of adherence of the virtual adhering substance in the virtual mobility through simulation, according to travel history or operation history of the vehicle 10.

For example, the vehicle management system 100 calculates the amount of engine oil consumption in the virtual mobility, and calculates a change in the warming-up performance of an engine, a change in the explosion primary component of the engine sound, a change in engine friction, and the like, according to the calculated amount of engine oil consumption. The vehicle management system 100 further calculates a change in the driving environment caused by the changes and makes the simulated driving environment (simulated engine sound) reflect the change.

The vehicle management system 100 calculates the amount of a deposit adhering inside the engine of the virtual mobility, and calculates a change in knocking sound according to the amount of the deposit. The vehicle management system 100 makes the simulated driving environment (simulated engine sound) reflect the sound with the change taken into consideration. Based on the amount of the adhering deposit, the vehicle management system 100 can also reproduce a change in a driving characteristic caused by a misfire due to deterioration of a spark plug, and also a change in a driving characteristic at a time of starting the engine.

Next, the second environment change processing is described. The second environment change processing (second processing) is processing of changing the simulated driving environment in response to the virtual maintenance. Typically, the second processing changes the simulated driving environment non-continuously, in response to the virtual maintenance.

In other words, the first processing is processing of generating changes in the driving environment with traveling of the virtual mobility, as the simulated driving environment in the vehicle 10, based on the maintenance indicator. The second processing is processing of bringing the simulated driving environment changed through the first processing back into the original state in response to the virtual maintenance. By the first processing and the second processing being combined, a progress is reproduced in which the driving environment changes with traveling of a real vehicle, and the driving environment that has changed recovers by maintenance.

With reference to the example in FIG. 5, a case is considered in which the virtual mobility is an engine vehicle and the virtual maintenance is replacement or replenishment of engine oil. First, a state is considered in which engine oil is virtually replaced or replenished in the virtual mobility through virtual maintenance IM1 performed at time t1. Thereafter, a sound generated through the first processing gradually changes until virtual maintenance IM2 (time t2). In such a case, the maintenance indicator that determines a degree of change in sound may be a simple indicator, such as the traveled distance, or may be the amount of engine oil consumption in the virtual mobility obtained through simulation. In the former case, since the amount of engine oil consumption is calculated by approximation using the simple indicator, the amount of data and the processing load are smaller. In the latter case, since the amount of engine oil consumption is calculated accurately through simulation, the amount of data and the processing load tend to be larger, although reliability as a maintenance indicator is higher. Engine oil is virtually replaced or replenished in the virtual mobility through the virtual maintenance IM2 (at time t2). In response to the virtual maintenance IM2, the vehicle management system 100 performs the second processing. The sound generated in the vehicle 10 is changed through the second processing. In the example in FIG. 5, the generated sound returns to a state (first state) immediately after the virtual maintenance IM1, through the second processing. Note that a state after the second processing does not necessarily need to be the same as a state brought by the previous virtual maintenance.

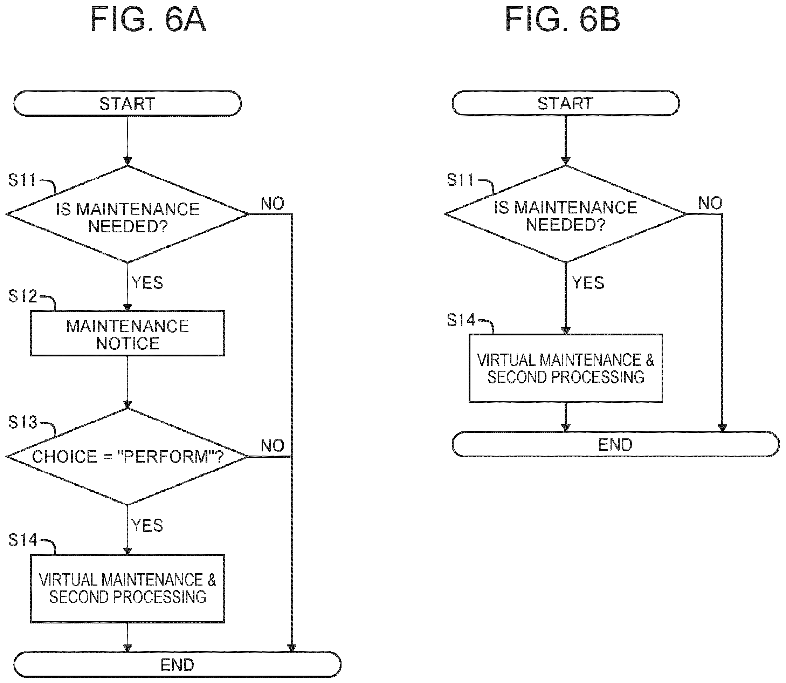

Next, a processing flow of the second processing is described. FIGS. 6A and 6B are flowcharts, each showing a series of processes related to the second processing. The depicted processes are executed repeatedly on a regular basis.

FIG. 6A is a flowchart in a case where the vehicle management system 100 presents, to a user of the vehicle 10, a notice (hereinafter, referred to as "maintenance notice") regarding whether to perform the virtual maintenance. Specifically, the maintenance notice includes options to ask whether to perform the virtual maintenance or not.

In step S11, the vehicle management system 100 determines, based on the maintenance indicator, whether the virtual maintenance is needed. Typically, the vehicle management system 100 performs the determination, based on the relationship in magnitude between a set threshold value and the current value of the maintenance indicator. For example, when a traveled distance, an amount of adherence of a virtual adhering substance, an amount of consumption of a virtual consumable, or the like that is the maintenance indicator exceeds the threshold value, it is determined that the virtual maintenance is needed. When it is determined that the virtual maintenance is needed (step S11; Yes), the processing moves to step S12. When it is determined that the virtual maintenance is not needed (step S11; No), the processing is terminated.

In step S12, the vehicle management system 100 presents a maintenance notice to a user. For example, the maintenance notice is presented visually or auditorily via the user interface 150 in the vehicle 10. The maintenance notice may be presented on an information terminal (smartphone, tablet, PC, or the like) owned by the user. The user having received the maintenance notice responds to the maintenance notice by choosing to, or not to, cause the vehicle management system 100 to perform the virtual maintenance.

In step S13, the vehicle management system 100 refers to the response to the maintenance notice from the user. When the user chooses to perform the virtual maintenance (step S13; Yes), the processing moves to step S14. When the user does not choose to perform the virtual maintenance (step S13; No), the processing is terminated. Cases where "the user does not choose to perform the virtual maintenance" also include a case where the user does not respond to the maintenance notice for a certain time period or longer, as well as a case where the user proactively chooses not to perform the virtual maintenance.

In step S14, the vehicle management system 100 performs the virtual maintenance. The vehicle management system 100 performs the second processing in response to the virtual maintenance. Thus, a simulated driving environment generated in or on the vehicle 10 is changed.

FIG. 6B is a flowchart in a case where the vehicle management system 100 does not present a maintenance notice to a user. In such a case, the process of presenting a maintenance notice and the process of determining a response from the user, that is, steps S12 to S13 in FIG. 6A are eliminated. In other word, when the vehicle management system 100 determines that the virtual maintenance is needed, the virtual maintenance and the second processing are automatically performed without involving an intention of the user.

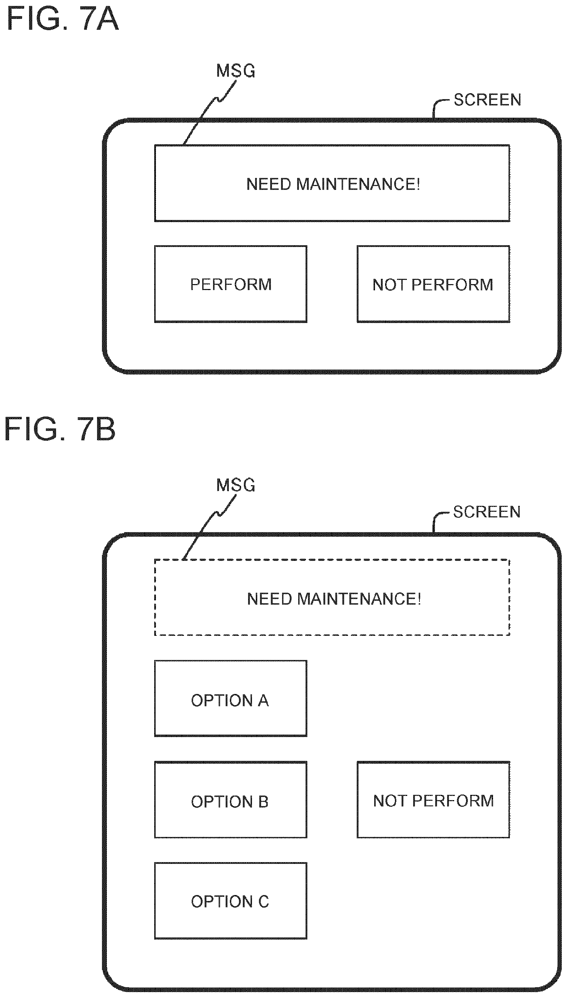

Next, as a modification example, examples of a notice screen to a user are described. FIGS. 7A and 7B are schematic diagrams of examples of a screen presenting a maintenance notice. FIG. 7A shows a basic example. In the screen, a message MSG indicating that the virtual maintenance is needed is displayed. Along with the message MSG, options to perform and not to perform the virtual maintenance are displayed. The vehicle management system 100 performs the virtual maintenance and the second processing when a user chooses "perform".

FIG. 7B is another example of the presentation screen. In the screen, a plurality of options A to C that corresponds to "performing the maintenance" is displayed. The options A to C indicate what maintenance is to be performed. For example, when the virtual maintenance is replacement of engine oil, each of the options A to C indicates an engine oil product that is different from the others. The vehicle management system 100 may change the content of the second processing, according to each option. Thus, since a user can choose one of various kinds of virtual maintenance according to the own taste, a simulated driving environment is generated that authentically reproduces the choice made by the user. For example, one or some of options may be provided for a charge, and different prices may be set on the individual options. Note that the number of options is not limited to the example (three) in FIG. 7B.

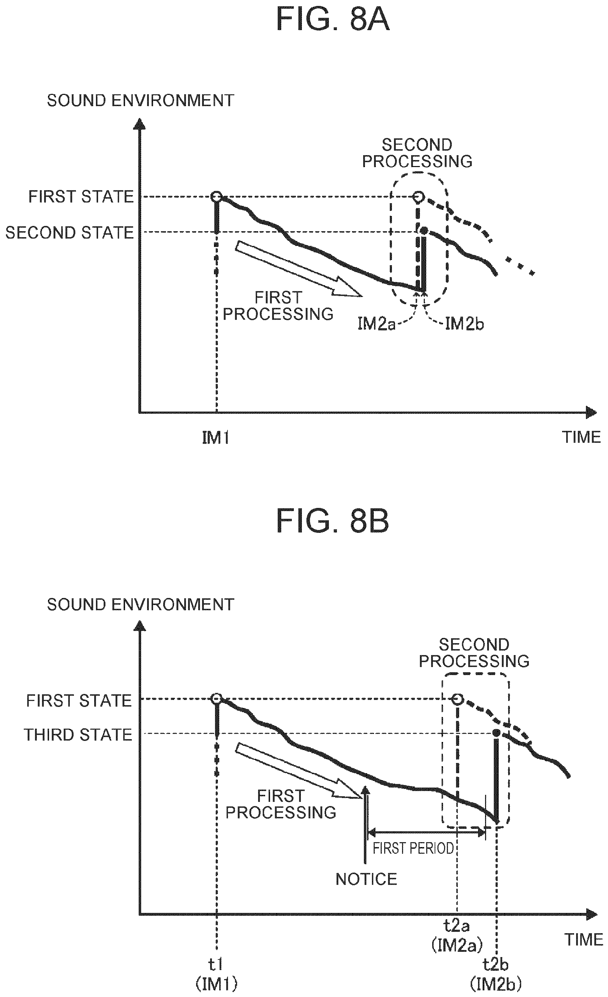

Next, modification examples of the second environment change processing are described. FIGS. 8A and 8B are graphs showing some modification examples of the second processing. The basic configurations of the graphs are similar to that of FIG. 5.

FIG. 8A shows an example of the second processing that takes driving history of the vehicle 10 into consideration. The driving history includes history of driving state information DRV, and the cumulative traveled distance or travel time. In other words, it can be said that the driving history indicates how and how long the vehicle 10 has been used to the present. In FIG. 8A, a case is considered in which the cumulative traveled distance of the vehicle 10 is considerably long. When the driving history of the vehicle 10 is not taken into consideration, the second processing responding to virtual maintenance IM2a is performed as indicated by a dash line in the graph. Thus, a simulated driving environment returns to a first state (that is, the same as the state immediately after virtual maintenance IM1). In contrast, when the driving history of the vehicle 10 is taken into consideration (virtual maintenance IM2b), the simulated driving environment transitions to a second state (a solid line in the graph) that is different from the first state. The processing reproduces a phenomenon in which a driving environment of a general vehicle is not restored, even though maintenance is performed, to a similar level to that at the time of the previous maintenance, depending on the driving history. Thus, a user can experience a sensation of aging of the virtual mobility corresponding to aging of the vehicle 10 in an authentical manner through the simulated driving environment.

FIG. 8B shows an example of the second processing in which an idea of "virtual maintenance recommendation period" is introduced. In the example, when the vehicle management system 100 presents a notice urging the virtual maintenance to a user, the vehicle management system 100 sets a virtual maintenance recommendation period (first period in the drawing). When the virtual maintenance is performed during the first period (when virtual maintenance IM2a is performed at time t2a), a simulated driving environment returns to a first state through the second processing, as shown by a dash line in the graph. In contrast, when the virtual maintenance is performed after the first period has passed (when virtual maintenance IM2b is performed at time t2b), the simulated driving environment transitions to a third state (a solid line in the graph) that is different from the first state. The processing reproduces a phenomenon in which after an appropriate maintenance period passes, a driving environment of a general vehicle is not restored even if maintenance is performed.

Next, reproduction of maintenance history of a target vehicle is described. The vehicle management system 100 can also change a simulated driving environment in or on the vehicle 10, according to history of "actual" maintenance performed on a vehicle (target vehicle) that actually exists or existed. When the maintenance history of the target vehicle is kept in the form of data, the vehicle management system 100 reads the maintenance history data (target history) on the target vehicle and records the target history in the storage device 102. The vehicle management system 100 changes the simulated driving environment in or on the vehicle 10, based on the recorded target history. The processing can be referred to as "third environment change processing (third processing)". Through the third processing, for example, maintenance history of a vehicle that was owned by a user of the vehicle 10 in the past is reproduced on the vehicle 10. The user can experience a sensation of driving the favorite vehicle.

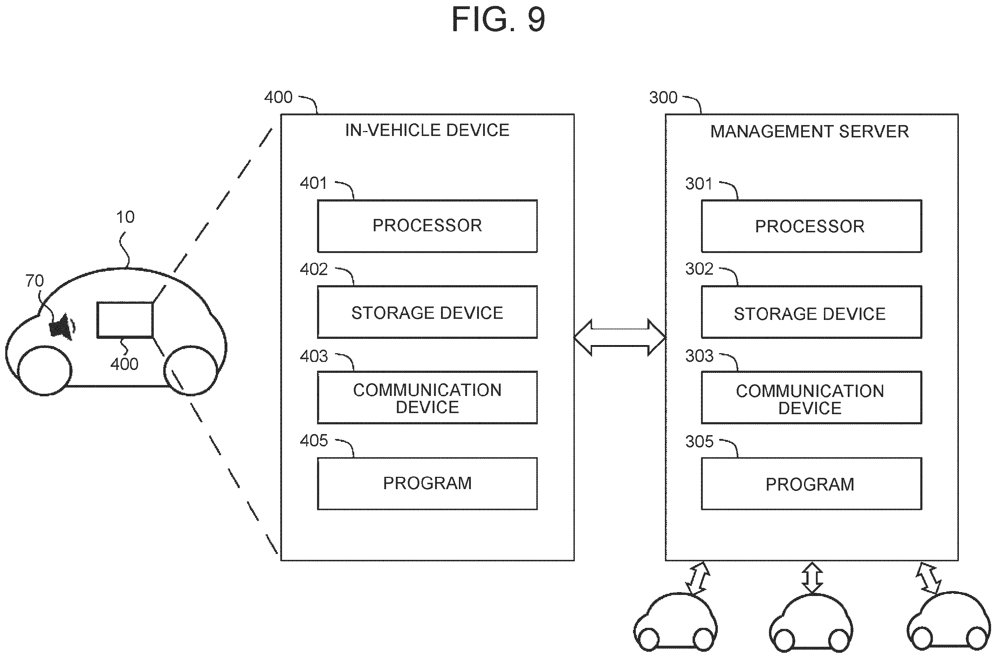

Next, various aspects of operation are described. FIG. 9 is a block diagram for describing an in-vehicle device 400 and a management server 300 included in the vehicle management system 100. The in-vehicle device 400 and the management server 300 can communicate with each other through a communication network.

The in-vehicle device 400 is mounted in the vehicle 10. The in-vehicle device 400 includes one or more processors 401 (hereinafter, simply referred to as the processor 401), one or more storage devices 402 (hereinafter, simply referred to as the storage device 402), and a communication device 403. The processor 401 executes various processes. Examples of the processor 401 include a general-purpose processor, an application-specific processor, a CPU, a GPU, an ASIC, an FPGA, an integrated circuit, conventional circuits, and/or a combination of any thereof. The processor 401 can also be referred to as circuitry or processing circuitry. The storage device 402 stores various kinds of information. Examples of the storage device 402 include a volatile memory, a non-volatile memory, an HDD, an SSD, and the like. The communication device 403 performs communication with the management server 300. The functionality of the in-vehicle device 400 is implemented through cooperation between the processor 401 and the storage device 402. A program 405 is a computer program that is executed by the processor 401. The functionality of the in-vehicle device 400 may be implemented through cooperation between the processor 401 executing the program 405 and the storage device 402. The program 405 is stored in the storage device 402. Alternatively, the program 405 may be recorded on a computer-readable recording medium.

The management server 300 includes one or more processors 301 (hereinafter, simply referred to as the processor 301), one or more storage devices 302 (hereinafter, simply referred to as the storage device 302), and a communication device 303. The processor 301 executes various processes. Examples of the processor 301 include a general-purpose processor, an application-specific processor, a CPU, a GPU, an ASIC, an FPGA, an integrated circuit, conventional circuits, and/or a combination of any thereof. The processor 301 can also be referred to as circuitry or processing circuitry. The storage device 302 stores various kinds of information. Examples of the storage device 302 include a volatile memory, a non-volatile memory, an HDD, an SSD, and the like. The communication device 303 performs communication with the in-vehicle devices 400 of a large number of vehicles 10. The functionality of the management server 300 is implemented through cooperation between the processor 301 and the storage device 302. A program 305 is a computer program that is executed by the processor 301. The functionality of the management server 300 may be implemented through cooperation between the processor 301 executing the program 305 and the storage device 302. The program 305 is stored in the storage device 302. Alternatively, the program 305 may be recorded on a computer-readable recording medium.

Any one, or a combination, of the processor 401 of the in-vehicle device 400 and the processor 301 of the management server 300 corresponds to the one or more processors 101 shown in FIG. 1. Any one, or a combination, of the storage device 402 of the in-vehicle device 400 and the storage device 302 of the management server 300 corresponds to the one or more storage devices 102 shown in FIG. 1. Any one, or a combination, of the program 405 for the in-vehicle device 400 and the program 305 for the management server 300 corresponds to the vehicle management program 105 shown in FIG. 1.

For example, all of the driving state acquisition unit 110, the sound source data management unit 120, the sound generation unit 130, the output unit 140, and the user interface 150 may be included in the in-vehicle device 400. In such a case, management of simulated sounds is performed within the vehicle 10.

As another example, the sound source data management unit 120 may be included in the management server 300. In such a case, the sound source data management unit 120 collectively manages the basic sound source data 200 that is used in a plurality of vehicles 10. Accordingly, a set of basic sound source data 200 is associated with a vehicle ID. The sound source data management unit 120 manages the basic sound source data 200 that is available, for each vehicle ID. The sound generation unit 130 of the in-vehicle device 400 downloads an available set of basic sound source data 200 that is associated with a vehicle ID from the sound source data management unit 120 of the management server 300. The collective management, by the management server 300, of the basic sound source data 200 that is used in a plurality of vehicles 10 is preferable in terms of management of the basic sound source data 200.

Next, an application to a battery electric vehicle including a manual mode (MT mode) is described. An electric motor used for a traveling power plant in general battery electric vehicles has a torque characteristic that is greatly different from that of an internal combustion engine used for a traveling power plant in conventional vehicles (CVs). Because of the difference in torque characteristic of the power plant, battery electric vehicles generally do not include a transmission while a transmission is essential to CVs. General battery electric vehicles naturally do not include a manual transmission (MT) that changes gear ratios through a manual operation by a driver. Accordingly, there is a great difference in driving sensation between driving of a conventional vehicle with an MT (hereinafter, referred to as an MT vehicle) and driving of a battery electric vehicle.

An electric motor can relatively easily control torque by controlling voltage to be applied or a filed.

Accordingly, with an electric motor, a desired torque characteristic can be obtained within the scope of operation of the electric motor by performing appropriate control. By utilizing such a characteristic, a torque characteristic specific to an MT vehicle can be simulated by controlling torque for a battery electric vehicle. A pseudo-shifter can also be provided to the battery electric vehicle such that a driver can experience a driving sensation like the MT vehicle. Thus, it is possible to simulate the MT vehicle on the battery electric vehicle.

In other words, the battery electric vehicle controls an output of the electric motor in such a manner as to simulate a driving characteristic (torque characteristic) specific to the MT vehicle. The driver performs a pseudo-manual transmission operation by operating the pseudo-shifter. In response to the pseudo-manual transmission operation performed by the driver, the battery electric vehicle simulates the MT vehicle and changes the driving characteristic (torque characteristic). Thus, the driver of the battery electric vehicle can experience a sensation as if driving the MT vehicle. A control mode of the electric motor for simulating a driving characteristic and a manual transmission operation of an MT vehicle as described above is referred to as "manual mode" or "MT mode" hereinafter.

In the following, a case is considered in which the vehicle 10 according to the present disclosure is a battery electric vehicle 10E including the MT mode. In the MT mode, the battery electric vehicle 10E may generate a simulated engine sound according to a driving operation by the driver and output the simulated engine sound via the speaker 70. Since not only a driving operation of an MT vehicle, an engine sound of the MT vehicle is also reproduced, the degree of satisfaction of a driver who seeks reality is increased. Hereinafter, configuration examples of the battery electric vehicle 10E including the MT mode are described. Examples of the MT mode include a "sequential shift mode" and a "three-pedal mode".

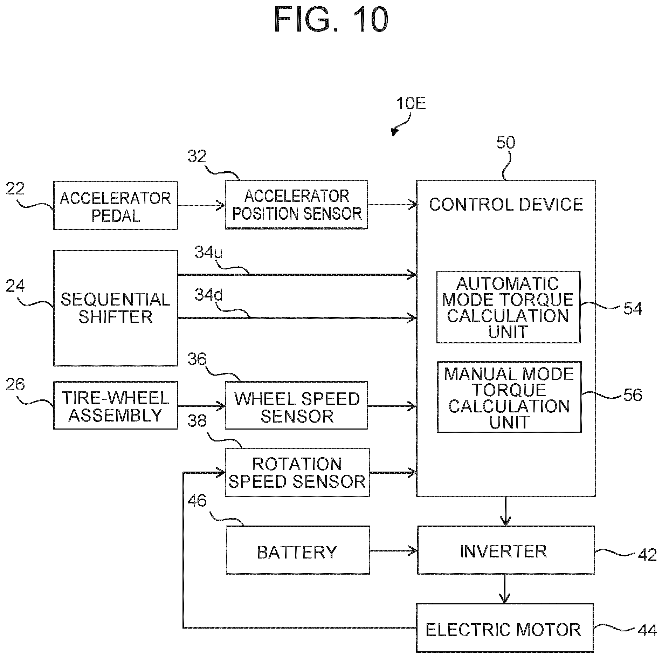

Next, a first configuration example (sequential shift mode) is described. FIG. 10 is a block diagram showing the first configuration example of a power control system of the battery electric vehicle 10E according to the present embodiment. The battery electric vehicle 10E includes an electric motor 44, a battery 46, and an inverter 42. The electric motor 44 is a traveling power plant. The battery 46 stores electric energy that drives the electric motor 44. In other words, the battery electric vehicle 10E is a battery electric vehicle (BEV) that travels with the electric energy stored in the battery 46. At a time of acceleration, the inverter 42 converts direct-current electricity input from the battery 46 into driving electricity for the electric motor 44. At a time of deceleration, the inverter 42 converts regenerative electricity input from the electric motor 44 into direct-current electricity, with which the battery 46 is charged.

The battery electric vehicle 10E includes an accelerator pedal 22 for the driver to input an acceleration request to the battery electric vehicle 10E. An accelerator position sensor 32 for detecting an accelerator operation amount is provided to the accelerator pedal 22.

The battery electric vehicle 10E includes a sequential shifter 24. The sequential shifter 24 may be paddle shifters, or a lever-type pseudo-shifter.

The paddle shifters are dummies that are different from true paddle shifters. The paddle shifters have a structure resembling paddle shifters included in a clutch-pedalless MT vehicle. The paddle shifters are attached to a steering wheel. The paddle shifters include an up-shift switch and a down-shift switch that determine an operation position. The up-shift switch issues an up-shift signal 34u by being pulled toward the driver, and the down-shift switch issues a down-shift signal 34d by being pulled toward the driver.

The lever-type pseudo-shifter, similarly to the paddle shifters, is a dummy that is different from a true shifter. The lever-type pseudo-shifter has a structure resembling a lever shifter included in a clutch-pedalless MT vehicle. The lever-type pseudo-shifter is configured to output an up-shift signal 34u by moving down the shift lever toward the front, and to output a down-shift signal 34d by moving down the shift lever toward the rear.

A wheel speed sensor 36 is provided to a tire-wheel assembly 26 of the battery electric vehicle 10E. The wheel speed sensor 36 is used for a vehicle speed sensor to detect the vehicle speed of the battery electric vehicle 10E. A rotation speed sensor 38 is provided to the electric motor 44 to detect the rotation speed of the electric motor 44.

The battery electric vehicle 10E includes a control device 50. The control device 50 is, typically, an electronic control unit (ECU) mounted in the battery electric vehicle 10E. The control device 50 may be a combination of a plurality of ECUs. The control device 50 includes an interface, memory, and a processor. An in-vehicle network is connected to the interface. The memory includes a RAM on which data is temporarily recorded, and a ROM in which a processor-executable program and various kinds of data related to the program are retained. The program includes a plurality of instructions. The processor reads from the memory and executes the program and the data, and generates a control signal, based on a signal acquired from each sensor.

For example, the control device 50 controls the electric motor 44 through PWM control of the inverter 42. Signals from the accelerator position sensor 32, the sequential shifter 24 (the up-shift switch and the down-shift switch when the sequential shifter 24 is paddle shifters), the wheel speed sensor 36, and the rotation speed sensor 38 are input into the control device 50. The control device 50 processes the signals and calculates a motor torque instruction value for PWM control of the inverter 42.

The control device 50 includes an automatic mode (EV mode) and a manual mode (MT mode) as control modes. The automatic mode is a normal control mode for driving the battery electric vehicle 10E as a general battery electric vehicle. The automatic mode is programmed to cause outputs of the electric motor 44 to continuously change according to operation of the accelerator pedal 22. The manual mode is a control mode for driving the battery electric vehicle 10E like an MT vehicle. The manual mode is programmed to cause an output characteristic of the electric motor 44 responding to operation of the accelerator pedal 22 to change according to up-shift operation and down-shift operation of the sequential shifter 24. The manual mode (MT mode) corresponds to the "sequential shift mode". A switch can be made between the automatic mode and the manual mode.

The control device 50 includes an automatic mode torque calculation unit 54 and a manual mode torque calculation unit 56. Each unit 54, 56 may be an independent ECU from each other, or may be an ECU function obtained by the program recorded on the memory being executed by the processor.

The automatic mode torque calculation unit 54 includes a function of calculating a motor torque in a case of controlling the electric motor 44 in the automatic mode. A motor torque instruction map is stored in the automatic mode torque calculation unit 54. The motor torque instruction map is a map that determines a motor torque from an accelerator operation amount and a rotation speed of the electric motor 44. A signal from the accelerator position sensor 32 and a signal from the rotation speed sensor 38 are input into parameters of the motor torque instruction map, respectively. A motor torque corresponding to the signals is output from the motor torque instruction map. Accordingly, in the automatic mode, even if a driver operates the sequential shifter 24, the operation is not reflected in the motor torque.

The manual mode torque calculation unit 56 includes an MT vehicle model. The MT vehicle model is a model for calculating a drive wheel torque supposed to be obtained through operation of the accelerator pedal 22 and the sequential shifter 24 when the battery electric vehicle 10E is assumed to be an MT vehicle.

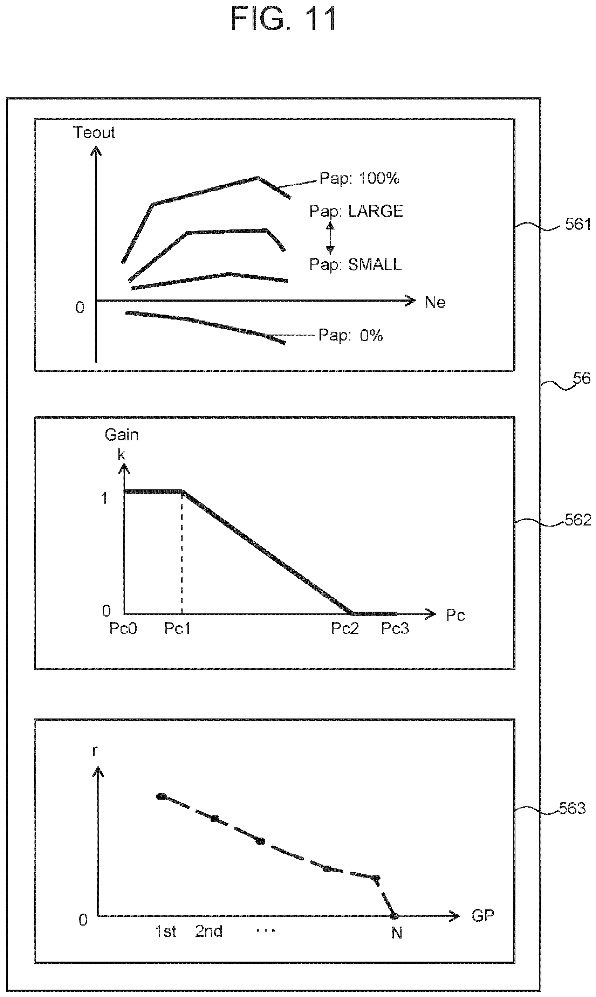

The MT vehicle model included in the manual mode torque calculation unit 56 is described with reference to FIG. 11. As shown in FIG. 11, the MT vehicle model includes an engine model 561, a clutch model 562, and a transmission model 563. Note that an engine, a clutch, and a transmission virtually realized by the MT vehicle model are referred to as a virtual engine, a virtual clutch, and a virtual transmission, respectively. In the engine model 561, the virtual engine is modeled. In the clutch model 562, the virtual clutch is modeled. In the transmission model 563, the virtual transmission is modeled.

The engine model 561 calculates a virtual engine speed Ne and a virtual engine output torque Teout. The virtual engine speed Ne is calculated based on a wheel rotation speed Nw, a total reduction gear ratio R, and a virtual clutch slip ratio Rslip. For example, the virtual engine speed Ne is represented by a following expression (1).

$$\text{Expression (1): } Ne = Nw \times R/(1 - Rslip)$$

The virtual engine output torque Teout is calculated from the virtual engine speed Ne and an accelerator operation amount Pap. In the calculation of the virtual engine output torque Teout, a map is used that defines the relationship among the accelerator operation amount Pap, the virtual engine speed Ne, and the virtual engine output torque Teout, as shown in FIG. 11. The map gives a virtual engine output torque Teout corresponding to a virtual engine speed Ne, for each accelerator operation amount Pap. The torque characteristics shown in FIG. 11 can be set to characteristics supposing a gasoline engine, or to characteristics supposing a diesel engine. The torque characteristics can be set to characteristics supposing a naturally aspirated engine, or to characteristics supposing a supercharged engine.

The clutch model 562 calculates a torque transmission gain k. The torque transmission gain k is a gain for calculating the degree of transmission of the torque of the virtual clutch according to a virtual clutch release rate Pc. The virtual clutch release rate Pc is 0% in normal times, and changes to 100% for a temporary release in conjunction with a change in the virtual gear stage of the virtual transmission. The clutch model 562 includes a map as shown in FIG. 11. The map gives a torque transmission gain k corresponding to a virtual clutch release rate Pc. In FIG. 11, Pc0 corresponds to a location when the virtual clutch release rate Pc is 0%, and Pc3 corresponds to a location when the virtual clutch release rate Pc is 100%. The range of Pc0 to Pc1 and the range of Pc2 to Pc3 are dead zones in which the torque transmission gain k does not change with the virtual clutch release rate Pc. The clutch model 562 uses the torque transmission gain k to calculate a clutch output torque Tcout. The clutch output torque Tcout is a torque output from the virtual clutch. For example, the clutch output torque Tcout is given as the product of the virtual engine output torque Teout and the torque transmission gain k, as represented by a following expression (2).

$$\text{Expression (2): } Tcout = Teout \times k$$

The clutch model 562 calculates the slip ratio Rslip. The slip ratio Rslip is used in the calculation of the virtual engine speed Ne by the engine model 561. In the calculation of the slip ratio Rslip, similarly to the torque transmission gain k, a map can be used that gives a slip ratio Rslip corresponding to a virtual clutch release rate Pc.

The transmission model 563 calculates a gear ratio r. The gear ratio r is a gear ratio determined by a virtual gear stage GP in the virtual transmission. The virtual gear stage GP is up-shifted by one stage in response to up-shift operation of the sequential shifter 24. The virtual gear stage GP is down-shifted by one stage in response to down-shift operation of the sequential shifter 24. The transmission model 563 includes a map as shown in FIG. 11. The map gives a gear ratio r corresponding to a virtual gear stage GP in such a manner that the larger the virtual gear stage GP is, the smaller the gear ratio r is. The transmission model 563 uses the gear ratio r obtained from the map and the clutch output torque Tcout to calculate a transmission output torque Tgout. For example, the transmission output torque Tgout is given as the product of the clutch output torque Tcout and the gear ratio r, as represented by a following expression (3).

$$\text{Expression (3): } Tgout = Tcout \times r$$

The transmission output torque Tgout non-continuously changes in response to a change in the gear ratio r. Such a non-continuous change in the transmission output torque Tgout causes gearshift shock, which stages a typical feature of a vehicle with a multistage transmission.

The MT vehicle model calculates a drive wheel torque Tw, using a predetermined reduction ratio rr. The reduction ratio rr is a fixed value determined by a mechanical structure ranging from the virtual transmission to a drive wheel. A value obtained by multiplying the reduction ratio rr by the gear ratio r is the total reduction gear ratio R. The MT vehicle model calculates the drive wheel torque Tw from the transmission output torque Tgout and the reduction ratio rr. For example, the drive wheel torque Tw is given as the product of the transmission output torque Tgout and the reduction ratio rr, as represented by a following expression (4).

$$\text{Expression (4): } Tw = Tgout \times rr$$

The control device 50 converts the drive wheel torque Tw calculated by the MT vehicle model into a required motor torque Tm. The required motor torque Tm is a motor torque needed to realize the drive wheel torque Tw calculated by the MT vehicle model. In the conversion of the drive wheel torque Tw into the required motor torque Tm, a reduction ratio from an output shaft of the electric motor 44 up to the drive wheel is used. Then, the control device 50 controls the electric motor 44 by controlling the inverter 42, according to the required motor torque Tm.

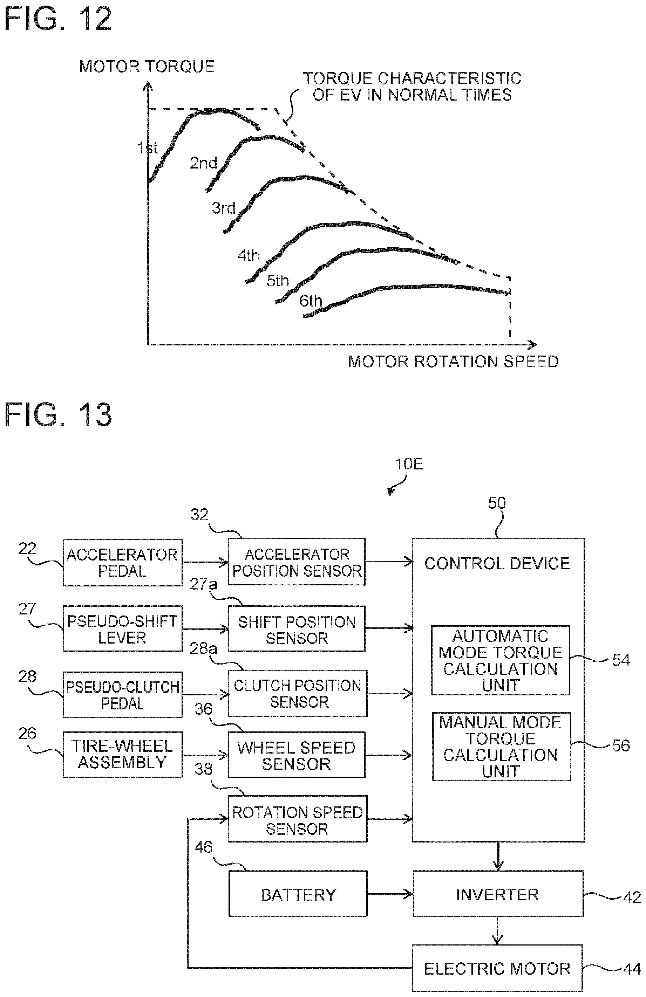

FIG. 12 shows torque characteristics of the electric motor 44 realized through motor control using the MT vehicle model, in comparison with a torque characteristic of the electric motor 44 realized through normal motor control for a battery electric vehicle (EV). Through the motor control using the MT vehicle model, as shown in FIG. 12, torque characteristics (solid lines in the drawing) that simulate torque characteristics of an MT vehicle can be realized, according to virtual gear stages set by the sequential shifter 24. Note that the number of gear stages is six in FIG. 12.

Next, a second configuration example (three-pedal mode) is described. FIG. 13 is a block diagram showing the second configuration example of the power control system of the battery electric vehicle 10E according to the present embodiment. Here, a description is given only of components that are different from the first configuration example. Specifically, in the second configuration example, the battery electric vehicle 10E includes a pseudo-shift lever (pseudo-shift device) 27 and a pseudo-clutch pedal 28, in place of the sequential shifter 24 included in the first configuration example. The pseudo-shift lever 27 and the pseudo-clutch pedal 28 are merely dummies that are different from a true shift lever and a true clutch pedal.

The pseudo-shift lever 27 has a structure that simulates a shift lever included in an MT vehicle. Disposition of and an operation feeling about the pseudo-shift lever 27 are similar to those of an actual MT vehicle. In the pseudo-shift lever 27, positions are set that correspond to individual gear stages, such as first gear, second gear, third gear, fourth gear, fifth gear, sixth gear, reverse, and neutral. To the pseudo-shift lever 27, a shift position sensor 27a is provided that detects a gear stage by determining which position the pseudo-shift lever 27 is in.

The pseudo-clutch pedal 28 has a structure that simulates a clutch pedal included in an MT vehicle. Disposition of and an operational feeling about the pseudo-clutch pedal 28 are similar to those of an actual MT vehicle. The pseudo-clutch pedal 28 is operated at a time of operating the pseudo-shift lever 27. In other words, a driver depresses the pseudo-clutch pedal 28 when the driver wants to change gear stage settings by using the pseudo-shift lever 27, and, when the change in gear stage setting is finished, ceases from depressing to bring the pseudo-clutch pedal 28 back to the original position. To the pseudo-clutch pedal 28, a clutch position sensor 28a is provided that is to detect the amount of depression of the pseudo-clutch pedal 28.

Signals from the accelerator position sensor 32, the shift position sensor 27a, the clutch position sensor 28a, the wheel speed sensor 36, and the rotation speed sensor 38 are input into the control device 50. The control device 50 processes the signals and calculates a motor torque instruction value for PWM control of the inverter 42.

As in the first configuration example, the control device 50 includes an automatic mode and a manual mode as control modes. The automatic mode is programmed to cause outputs of the electric motor 44 to continuously change according to operation of the accelerator pedal 22. The manual mode is a control mode for driving the battery electric vehicle 10E like an MT vehicle. The manual mode is programmed to cause outputs and an output characteristic of the electric motor 44 responding to operation of the accelerator pedal 22 to change according to operation of the pseudo-clutch pedal 28 and the pseudo-shift lever (pseudo-shift device) 27. The manual mode (MT mode) corresponds to the "three-pedal mode". A switch can be made between the automatic mode and the manual mode.

Vehicle models included in the manual mode torque calculation unit 56 are similar to those shown in FIG. 11. However, the virtual clutch release rate Pc is replaced with the amount of depression of the pseudo-clutch pedal 28 detected by the clutch position sensor 28a. A virtual gear stage GP is determined by a position of the pseudo-shift lever 27 detected by the shift position sensor 27a.

**Claims**

1. A vehicle management system (100) that is applied to a vehicle (10), the vehicle management system (100) comprising:

   one or more processors (101) configured to generate a simulated driving environment that simulates a driving environment of virtual mobility; and
   virtual maintenance that is maintenance to be virtually performed on the virtual mobility, wherein

   the one or more processors (101) are configured to execute first environment change processing of changing the simulated driving environment, based on a maintenance indicator indicating a degree of need for the virtual maintenance, and
   the one or more processors (101) are configured to execute second environment change processing of changing the simulated driving environment, according to at least the virtual maintenance.

2. The vehicle management system (100) according to claim 1, wherein the one or more processors (101) are further configured to determine, based on the maintenance indicator, whether to perform the virtual maintenance.

3. The vehicle management system (100) according to claim 1, wherein the one or more processors (101) are further configured to present to a user of the vehicle (10), based on the maintenance indicator, a notice including an option that asks whether to perform the virtual maintenance.

4. The vehicle management system (100) according to claim 3, wherein the notice further includes an option that indicates content of the virtual maintenance.

**5.** The vehicle management system (100) according to claim 3, wherein the one or more processors (101) are further configured to make a degree by which the simulated driving environment is changed through the second environment change processing differ between when the virtual maintenance is performed within a first period and when the virtual maintenance is performed after the first period passes.

**6.** The vehicle management system (100) according to any one of claims 1 to 5, wherein the one or more processors (101) are configured to execute the second environment change processing, according to the virtual maintenance and driving history of the vehicle (10).

**7.** The vehicle management system (100) according to any one of claims 1 to 5, wherein:

a virtual consumable is a consumable that is virtually consumed as the virtual mobility virtually travels; and
the virtual maintenance includes replenishment or replacement of the virtual consumable.

**8.** The vehicle management system (100) according to claim 7, wherein the maintenance indicator includes an amount of consumption of the virtual consumable.

**9.** The vehicle management system (100) according to any one of claims 1 to 5, wherein:

a virtual adhering substance is a substance that virtually adheres to the virtual mobility as the virtual mobility virtually travels; and
the virtual maintenance includes removal of the virtual adhering substance.

**10.** The vehicle management system (100) according to claim 9, wherein the maintenance indicator includes an amount of adherence of the virtual adhering substance.

**11.** The vehicle management system (100) according to any one of claims 1 to 5, **characterized in that** the simulated driving environment includes vibration that virtually occurs as the virtual mobility virtually travels.

**12.** The vehicle management system (100) according to any one of claims 1 to 5, further comprising one or more storage devices (102; 302, 402) configured to store target history that is history of actual maintenance of a target vehicle, wherein
the one or more processors (101) are further configured to execute third environment change processing of changing the simulated driving environment, based on the target history.

**13.** A method of controlling a vehicle, comprising:

generating a simulated driving environment that simulates a driving environment of virtual mobility;
virtually performing maintenance of the virtual mobility;
executing first environment change processing of changing the simulated driving environment, based on a maintenance indicator indicating a degree of need for virtual maintenance that is the virtually performed maintenance; and
executing second environment change processing of changing the simulated driving environment, according to at least the virtual maintenance.

**14.** A battery electric vehicle (10E) that uses an electric motor for a traveling power plant, the battery electric vehicle comprising one or more processors (101) that generate a simulated driving environment that simulates a driving environment of virtual mobility, wherein

virtual maintenance is maintenance to be virtually performed on the virtual mobility; the one or more processors (101) are configured to execute first environment change processing of changing the simulated driving environment, based on a maintenance indicator indicating a degree of need for the virtual maintenance; and
the one or more processors (101) are configured to execute second environment change processing of changing the simulated driving environment, according to at least the virtual maintenance.

# FIG. 1

100

## VEHICLE MANAGEMENT SYSTEM

101

### PROCESSOR

102

### STORAGE DEVICE

105

### VEHICLE MANAGEMENT PROGRAM

10

70

11

### SENSOR

44

### ELECTRIC MOTOR

# FIG. 2

100

VEHICLE MANAGEMENT SYSTEM

<SIMULATION MODE>

SIMULATION OF VIRTUAL MOBILITY

(1) SIMULATION OF DRIVING
CHARACTERISTIC
(2) SIMULATION OF SOUND
(GENERATION AND OUTPUT OF SIMULATED SOUND)
(3) SIMULATION OF VIBRATION

10

70

11

SENSOR

44

ELECTRIC MOTOR

# FIG. 3

# FIG. 4

SOUND SOURCE DATA MANAGEMENT UNIT — 120

200-A  200-B  200-C

200-D  200-E  200-F

110 — DRIVING STATE ACQUISITION UNIT

11 →

DRV →

130 — SOUND GENERATION UNIT

200-B

BASIC SOUND SOURCE DATA

ES →

140 — OUTPUT UNIT

70

150 — USER INTERFACE

EP 4 711 997 A1

# FIG. 5

SOUND ENVIRONMENT

FIRST STATE

FIRST
PROCESSING

SECOND
PROCESSING

t1
(IM1)

t2
(IM2)

TIME

# FIG. 6A

```
        ┌─────────────────┐
        │     START        │
        └─────────────────┘
                 │
                 ▼
S11─┐    ╱ IS MAINTENANCE ╲        NO
    ────◆     NEEDED?      ◆──────────┐
         ╲               ╱            │
                 │                    │
               YES                    │
S12─┐            │                    │
    ─┌─────────────────┐              │
     │  MAINTENANCE    │              │
     │    NOTICE       │              │
     └─────────────────┘              │
                 │                    │
                 ▼                    │
S13─┐    ╱                 ╲     NO   │
    ────◆ CHOICE = "PERFORM"? ◆───────┤
         ╲               ╱            │
                 │                    │
               YES                    │
S14─┐            │                    │
    ─┌─────────────────┐              │
     │VIRTUAL MAINTENANCE &│          │
     │ SECOND PROCESSING │            │
     └─────────────────┘              │
                 │                    │
                 ▼                    ▼
        ┌─────────────────────────────┐
        │            END               │
        └─────────────────────────────┘
```

# FIG. 6B

```
        ┌─────────────────┐
        │     START        │
        └─────────────────┘
                 │
                 ▼
S11─┐    ╱ IS MAINTENANCE ╲        NO
    ────◆     NEEDED?      ◆──────────┐
         ╲               ╱            │
                 │                    │
               YES                    │
S14─┐            │                    │
    ─┌─────────────────┐              │
     │VIRTUAL MAINTENANCE &│          │
     │ SECOND PROCESSING │            │
     └─────────────────┘              │
                 │                    │
                 ▼                    ▼
        ┌─────────────────────────────┐
        │            END               │
        └─────────────────────────────┘
```

EP 4 711 997 A1

# FIG. 7A

# FIG. 7B

# FIG. 8A

SOUND ENVIRONMENT

SECOND
PROCESSING

FIRST STATE

SECOND STATE

FIRST
PROCESSING

IM2a        IM2b

IM1                                        TIME

# FIG. 8B

SOUND ENVIRONMENT

SECOND
PROCESSING

FIRST STATE

THIRD STATE

FIRST
PROCESSING

FIRST PERIOD

NOTICE

t2a
(IM2a)

t1
(IM1)

TIME

t2b
(IM2b)

# FIG. 9

IN-VEHICLE DEVICE (400)

- PROCESSOR (401)
- STORAGE DEVICE (402)
- COMMUNICATION DEVICE (403)
- PROGRAM (405)

MANAGEMENT SERVER (300)

- PROCESSOR (301)
- STORAGE DEVICE (302)
- COMMUNICATION DEVICE (303)
- PROGRAM (305)

EP 4 711 997 A1

# FIG. 10

# FIG. 11

# FIG. 12

MOTOR TORQUE

TORQUE CHARACTERISTIC
OF EV IN NORMAL TIMES

1st

2nd

3rd

4th

5th

6th

MOTOR ROTATION SPEED

# FIG. 13

10E

| 50 | CONTROL DEVICE |

22 ACCELERATOR PEDAL → 32 ACCELERATOR POSITION SENSOR → CONTROL DEVICE (50)

27a

27 PSEUDO-SHIFT LEVER → SHIFT POSITION SENSOR →

AUTOMATIC MODE TORQUE CALCULATION UNIT ~54

28a

28 PSEUDO-CLUTCH PEDAL → CLUTCH POSITION SENSOR →

36

MANUAL MODE TORQUE CALCULATION UNIT ~56

26 TIRE-WHEEL ASSEMBLY → WHEEL SPEED SENSOR →

38

ROTATION SPEED SENSOR →

46

BATTERY → INVERTER ~42

ELECTRIC MOTOR ~44

Europäisches
Patentamt

European
Patent Office

Office européen
des brevets

## EUROPEAN SEARCH REPORT

**Application Number**

EP 25 20 0424

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/090125 A1 (YEUNG YUNG [US]) 29 March 2018 (2018-03-29) | 1,9-11, 13,14 | INV. G06Q10/20 |
| Y | * paragraph [0015] - paragraph [0019] * <br> * paragraph [0040] - paragraph [0044] * <br> ----- | 2-8,12 | F02D19/02 G05B23/02 |
| Y | US 2019/250600 A1 (HAYASHI TATSUYA [JP]) 15 August 2019 (2019-08-15) <br> * figures 4,5 * <br> * paragraph [0020] - paragraph [0022] * <br> * paragraph [0028] - paragraph [0029] * <br> * paragraph [0035] - paragraph [0037] * <br> * paragraph [0041] - paragraph [0046] * <br> ----- | 2-8,12 | |
| A | WO 2014/094149 A1 (WESTPORT POWER INC [CA]) 26 June 2014 (2014-06-26) <br> * paragraph [0047] * <br> * paragraph [0052] - paragraph [0054] * <br> ----- | 1-14 | |

**TECHNICAL FIELDS SEARCHED (IPC)**

G06Q
G05B
F02D

The present search report has been drawn up for all claims

| Place of search | Date of completion of the search | Examiner |
|---|---|---|
| Munich | 19 January 2026 | Shivaldova, Veronika |

EPO FORM 1503 03.82 (P04C01)

# EP 4 711 997 A1

## ANNEX TO THE EUROPEAN SEARCH REPORT
## ON EUROPEAN PATENT APPLICATION NO.

EP 25 20 0424

19-01-2026

| Patent document cited in search report | Publication date | Patent family member(s) | Publication date |
|---|---|---|---|
| US 2018090125 A1 | 29-03-2018 | NONE | |
| US 2019250600 A1 | 15-08-2019 | JP 6468257 B2 | 13-02-2019 |
| | | JP 2018013842 A | 25-01-2018 |
| | | US 2019250600 A1 | 15-08-2019 |
| | | WO 2018016161 A1 | 25-01-2018 |
| WO 2014094149 A1 | 26-06-2014 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022036005 A